Europäisches Patentamt

European Patent Office

Office européen des brevets

(11) Veröffentlichungsnummer : **0 488 934 A2**

# (12) EUROPÄISCHE PATENTANMELDUNG

(21) Anmeldenummer : 91710046.3

(22) Anmeldetag : 18.11.91

(51) Int. Cl.$^5$ : **C09D 201/02,** C09D 163/00, C08G 12/46

(30) Priorität : 29.11.90 DE 4038007

(43) Veröffentlichungstag der Anmeldung :
03.06.92 Patentblatt 92/23

(84) Benannte Vertragsstaaten :
AT BE CH DE ES FR GB IT LI NL SE

(71) Anmelder : BAYER AG
W-5090 Leverkusen 1 Bayerwerk (DE)

(72) Erfinder : Köhler, Burkhard, Dr.
Mündelheimer Strasse 94
W-4150 Krefeld 11 (DE)
Erfinder : Dhein, Rolf, Dr.
Deswatinesstrasse 30
W-4150 Krefeld 1 (DE)
Erfinder : Reuter, Knud, Dr.
Scheiblersstrasse 99
W-4150 Krefeld (DE)
Erfinder : Bäcker, Lothar, Ing.grad.
Stürzelberger Strasse 73a
W-4047 Dormagen (DE)

(54) Beschichtungsmittel und ein Verfahren zur Herstellung von Beschichtungen.

(57)    Ein wäßriges Beschichtungsmittel bestehend im wesentlichen aus A) mindestens einem aminofunktionellen Polymeren mit gegebenenfalls zumindest teilweise protoniert vorliegenden Aminogruppen, B) einer Epoxidkomponente, bestehend aus mindestens einem organischen Polyepoxid, C) Glyoxal und/oder einem in wäßriger Phase wie Glyoxal reagierenden Glyoxalderivat, D) Wasser und gegebenenfalls E) weiteren Hilfs- und Zusatzmitteln und ein Verfahren zur Herstellung von Beschichtungen auf beliebigen Substraten unter Verwendung eines derartigen Beschichtungsmittels.

EP 0 488 934 A2

Die Erfindung betrifft ein neuartiges wäßriges Beschichtungsmittel, dessen Bindemittel im wesentlichen aus einer Kombination aus aminofunktionellen Polymeren, Polyepoxiden und Glyoxal oder Glyoxalderivaten besteht, sowie ein Verfahren zur Herstellung von Beschichtungen unter Verwendung dieses Beschichtungsmittels.

Wäßrige Beschichtungsmittel, die auf preisgünstigen Ausgangsmaterialien basieren und ohne Abspaltung von physiologisch bedenklichen Lösungsmitteln bzw. Spaltprodukten zu hochwertigen Lackfilmen ausgehärtet werden können, gewinnen aus wirtschaftlicher Sicht und aus arbeits- und umwelthygienischen Gründen zunehmend an Interesse.

Jetzt wurde überraschend ein völlig neuartiges Mehrkomponenten-System gefunden, welches die Herstellung von wäßrigen Beschichtungsmitteln gestattet, die diesen Forderungen der Praxis in optimaler Weise genügen.

Gegenstand der Erfindung sind wäßrige Beschichtungsmittel, bestehend im wesentlichen aus

A) mindestens einem aminofunktionellen Polymeren mit einem Gehalt an Stickstoff in Form von, gegebenenfalls zumindest teilweise protoniert vorliegenden, primären, sekundären oder tertiären Aminogruppen von 0,5 bis 10 Gew.-%,

B) einer Epoxidkomponente, bestehend aus mindestens einem organischen Polyepoxid mit einem Epoxidäquivalentgewicht von 87 bis 400.

C) Glyoxal und/oder einem in wäßriger Phase wie Glyoxal reagierenden Glyoxalderivat,

D) Wasser und gegebenenfalls

E) weiteren Hilfs- und Zusatzmitteln,

mit der Maßgabe, daß auf jedes Aminäquivalent der Komponente A) 0,3 bis 3 Epoxidäquivalente der Komponente B) und 0,5 bis 7 Mol Glyoxal oder eine äquivalente Menge eines Glyoxalderivats entfallen.

Gegenstand der Erfindung ist auch ein Verfahren zur Herstellung von Beschichtungen auf beliebigen Substraten durch Beschichtung der Substrate mit einem wäßrigen Beschichtungsmittel, welches als Bindemittel ein selbstvernetzendes Mehrkomponenten-System enthält, dadurch gekennzeichnet, daß als Beschichtungsmittel ein solches der soeben genannten Art verwendet wird.

Bei der Komponente A) handelt es sich um aminofunktionelle Polymere mit einem Gehalt an Stickstoff in Form von gegebenenfalls zumindest teilweise in mit Säuren neutralisierter Form vorliegenden primären, sekundären oder tertiären Aminogruppen (berechnet als "N", Atomgewicht = 14) von 0,5 bis 10, vorzugsweise 0,5 bis 5 und besonders bevorzugt 1 bis 3 Gew.-%. Vorzugsweise handelt es sich bei den genannten Aminogruppen ausschließlich um gegebenenfalls zumindest teilweise in mit Säure neutralisierter Form vorliegende tertiäre Aminogruppen.

Als Komponente A) kommen sowohl Polyadditonsprodukte als auch Polykondensationsprodukte als auch Polymerisate in Betracht.

Geeignete Polyadditionsprodukte sind insbesondere tert. Aminogruppen aufweisende und gegebenenfalls teilweise neutralisiert vorliegende Polyurethane wie sie in an sich bekannter Weise durch Umsetzung von organischen Polyisocyanaten mit Verbindungen mit gegenüber Isocyanatgruppen reaktionsfähigen Gruppen, insbesondere Hydroxylgruppen aufweisenden Verbindungen zugänglich sind, wobei die tert. Stickstoffatome durch Mitverwendung von ter. Stickstoffatome aufweisenden Aufbaukomponenten in das Molekül eingebaut werden. Die Herstellung von derartigen Polyurethanen mit eingebauten tert. Aminogruppen und die dazu zum Einsatz gelangenden Ausgangsmaterialien sind beispielsweise in US-PS 3 384 606, US-PS 3 388 087 oder US-PS 3 412 054 beschrieben.

Weiterhin als Komponente A) in Betracht kommen Polykondensationsprodukte, d.h. insbesondere Polyester mit eingebauten tert. Aminogruppen, die gegebenenfalls zumindest teilweise in mit Säuren neutralisierter Form vorliegen. Die Herstellung derartiger Polyester erfolgt in an sich bekannter Weise aus den üblichen Ausgangsmaterialien wie beispielsweise Dimethylterephthalat, Phthalsäure, Phthalsäureanhydrid und/oder Adipinsäure als Säurekomponente mit mehrwertigen Alkoholen wie beispielsweise Neopentylglycol, Ethylenglycol, Diethylenglycol, Triethylenglycol, Butandiol oder Hexandiol unter gleichzeitiger Mitverwendung von tert. Stickstoffatome aufweisenden Aufbaukomponenten, beispielsweise tert. Stickstoffatome aufweisenden mehrwertigen Alkoholen der in den vorstehend genannten US-Patenten beispielhaft genannten Art wie insbesondere N-Methyl-diethanolamin oder N-Methyl-dipropanolamin.

Besonders bevorzugt handelt es sich bei der Komponente A) jedoch um tert. Stickstoffatome aufweisende Polymerisate von olefinisch ungesättigten Monomeren. Die hier besonders bevorzugten Polymerisate weisen im allgemeinen ein nach der Methode der Gelpermeationschromatographie unter Verwendung von Polystyrol als Standard ermitteltes Molekulargewicht Mw von 2000 bis 20 000 auf. Besonders gut geeignet sind beispielsweise Copolymerisate aus

a) 10 bis 50 Gew.-% an aminofunktionellen Monomeren wie beispielsweise Estern der Acrylsäure oder Methacrylsäure mit tert. Aminostickstoffatome aufweisenden einwertigen Alkoholen, insbesondere Dimethylaminoethyl-acrylat bzw. -methacrylat,

b) 0 bis 50 Gew.-% Alkylmethacrylat mit 1 bis 4 Kohlenstoffatomen im Alkylrest, vorzugsweise Methylmethacrylat,

c) 0 bis 50 Gew.-% Styrol, wobei die Summe b) + c) 10 bis 70 Gew.-% ergibt,

d) 10 bis 45 Gew.-% eines oder mehrerer Alkylacrylate mit 1 bis 8 Kohlenstoffatomen im Alkylrest, vorzugsweise n-Butylacrylat,

e) 0 bis 45 Gew.-% eines oder mehrerer Hydroxyalkyl-acrylate oder -methacrylate mit 2 bis 6, vorzugsweise 2 oder 3 Kohlenstoffatomen im Hydroxyalkylrest, vorzugsweise Hydroxyethylmethacrylat, -acrylat und/ oder isomere Hydroxypropylmethacrylate oder -acrylate, und

f) 0 bis 35 Gew. -% an anderen olefinisch ungesättigten Monomeren, vorzugsweise Vinyltoluol, α-Methylstyrol, Vinylacetat, N-Vinylpyrrolidon-2 und/oder Vinylestern von höheren Fettsäuren, beispielsweise "Vinylversatat",

wobei sich die genannten Prozentsätze zu 100 ergänzen.

Weiterhin als Komponente A) in Betracht kommende Polymere sind solche, die durch polymeranaloge Reaktionen an nicht aminofunktionellen Polymeren, z.B. durch Umsetzung von Glycidylether-haltigen Polymeren mit Ammoniak, primären, sekundären oder tertiären Aminen hergestellt werden.

Die Neutralisation der aminofunktionellen Polymeren kann z.B. durch Carbonsäuren, wie z.B. Essigsäure, Propionsäure oder Benzoesäure, durch Hydroxycarbonsäuren, wie z.B. Milchsäure, Glyoxylsäure, Weinsäure oder Zitronensäure oder durch Phosphorsäure erfolgen. Eine (teilweise) Neutralisation der Komponente A) erübrigt sich oftmals im Falle der Mitverwendung von untergeordneten Mengen an wasserlöslichen, die Löslichkeit oder Dispergierbarkeit der Einzelkomponenten in Wasser vermittelnden Lösungsmitteln der nachstehend beispielhaft genannten Art oder bei Einbau von nichtrionisch-hydrophilen Gruppierungen in die Polymeren, beispielsweise von N-Vinylpyrrolidon-2 in die beispielhaft genannten Copolymerisate. Vorzugsweise wird jedoch die Wasserlöslichkeit bzw. -Dispergierbarkeit der Komponente A) durch zumindest teilweise Neutralisation der in der Komponente A) chemisch eingebauten Aminostickstoffatome bewirkt. Besonders bevorzugt handelt es sich daher bei den Polymeren A) um solche mit einem Gehalt an durch Neutralisation von Aminogruppen erhaltenen Ammoniumgruppen von 35 bis 350 Milliäquivalenten pro 100 g Feststoff.

Die Herstellung der besonders bevorzugt als Komponente A) geeigneten Copolymerisate kann durch Lösungspolymerisation in organischen Lösungsmitteln, wie z.B. Toluol, Chlorbenzol, Ethylacetat, Butylacetat, Ethyl- oder Methylglykolacetat, Methoxypropylacetat, Dioxan, Diethylenglykoldimethylether, Ethylenglykoldimethylether, Aceton, Butanon, Cyclohexanon, Dimethylacetamid oder N-Methylpyrrolidon, hergestellt werden. Als Polymerisationsstarter dieser radikalischen Polymerisationen können aliphatische Azoverbindungen, wie z.B. Azobisisobutyronitril (AIBN), oder peroxidische Verbindungen, wie z.B. Benzoylperoxid, tert-Butylperoctoat, tert-Butylperpivalat, tert-Butylperbenzoat oder Di-tert-butylperoxid, eingesetzt werden. Als Regler kommen vorzugsweise Mercaptoverbindungen, wie z.B. Dodecylmercaptan, Thioglycolsäure oder Thioglykol, in Frage. Falls die Herstellung von praktisch lösungsmittel freien wäßrigen Bindemittelkombinationen angestrebt wird, empfiehlt sich die ausschließliche Verwendung von solchen Lösungsmitteln der beispielhaft genannten Art, die destillativ aus dem wäßrigen System entfernt werden können. Derartige Lösungsmittel sind beispielsweise Toluol oder Aceton.

Es ist auch möglich, Polymerisate A einzusetzen, die durch an sich bekannte Emulsionspolymerisation von olefinisch ungesättigten Monomeren der beispielhaft genannten Art zugänglich sind.

Als Epoxidkomponente B) kommen im Princip beliebige organischen Polyepoxide mit einem Epoxidäquivalentgewicht von 87 bis 400, vorzugsweise 87 bis 200 in Betracht. Beispiele sind Trisglycidylisocyanurat, Tetrahydrophthalsäurediglycidylester, Bisphenol-A-bisglycidylether, Polyglycidylether von Novolaken, Bisglycidylether von Polyglykolen oder Epoxide, wie sie in Methoden der Organischen Chemie (Houben-Weyl), Band E 20, Georg Thieme Verlag Stuttgart, New York, 4. Aufl. 1987, Seite 1891-1950 und der dort zittierten Literatur beschrieben sind. Besonders bevorzugt werden in Wasser lösliche oder dispergierbare Polyepoxide, beispielsweise Bis-glycidylether von Polyethylenglykolen verwendet.

Bei der Komponente C) handelt es sich um Glyoxal oder um Glyoxalderivate, die in wäßriger Phase wie wäßriges Glyoxal reagieren. Derartige Glyoxalderivate sind beispielsweise trimäres Glyoxalhydrat oder Glyoxalacetale.

In den erfindungsgemäßen Beschichtungsmitteln liegen die wesentlichen Bindemittelkomponenten A), B) und C) in solchen Mengen vor, daß auf jedes Aminäquivalent der Komponente A), inklusive den gegebenenfalls durch Neutralisation mit einer Säure der beispielhaft genannten Art protonierten Aminogruppen, 0,3 bis 3, vorzugsweise 0,5 bis 2 Epoxidäquivalente und 0,5 bis 7, vorzugsweise 2 bis 6 Mol Glyoxal oder eine entsprechende Menge eines Glyoxalderivats entfallen.

Außer diesen wesentlichen Bindemittelkomponenten enthalten die erfindungsgemäßen Beschichtungsmittel selbstversändlich noch Wasser und zwar im allgemeinen in einer Menge von 10 bis 90, vorzugsweise 50 bis 80 Gew.-%, bezogen auf das Gesamtgewicht des gebrauchsfertigen Beschichtungsmittels.

Weiterhin können in den erfindungsgemäßen Beschichtungsmitteln Hilfs- und Zusatzmittel E) der aus der Lacktechnologie an sich bekannten Art vorliegen. Hierzu gehören beispielsweise Lösungsmittel der bereits oben beispielhaft genannten Art, Pigmente, Verlaufsmittel, Entschäumer, Entlüfter oder Dispergiermittel. Ferner ist es möglich, neben den erfindungswesentlichen Bindemittelkombinationen weitere, mit diesen verträglichen, wasserverdünnbare Bindemittel der an sich bekannten Art einzusetzen. Hierzu gehören beispielsweise wäßrige Polyacrylat- oder Polyurethandispersionen.

Die erfindungsgemäßen Beschichtungsmittel können in technisch üblicher Weise (Spritzen, Tauchen, Streichen etc) appliziert werden. Die Beschichtungen härten bereits bei Raumtemperatur zu lösungsmittelbeständigen, kratzfesten (nagelharten) Beschichtungen aus. Die Aushärtung kann gewünschtenfalls durch kurzzeitiges Erhitzen auf mäßig erhöhte Temperaturen (beispielsweise 80- 150°C) beschleunigt werden.

In den nachfolgenden Beispielen beziehen sich alle Angaben in Prozent und Teilen auf das Gewicht.

Beispiele

Herstellung der aminofunktionellen Polymeren A)

Beispiel 1

Als Monomerengemisch werden 672 g Styrol, 300,2 g Methylmethacrylat, 31,8 g n-Butylacrylat und 936,4 g Dimethylaminoethylmethacrylat mit 41,6 g Azobisisobutyronitril (AIBN) und 18,1 g Dodecanthiol eingesetzt. Man erhitzt 500 g Methoxypropanol unter Stickstoff auf 110°C und pumpt innerhalb von 2,5 h das Monomerengemisch hinzu. Man läßt 12 h bei 110°C nachreagieren, wobei nach 6 h mit 5 Gew.-% AIBN nachgestartet wird. Aminzahl = 171,9, Festgehalt = 79,1 %. Man neutralisiert zu 100 % mit Essigsäure und verdünnt mit Wasser auf einen Feststoffgehalt von 33 %.

Beispiel 2

Als Monomerengemisch werden 203,7 g Styrol, 59,5 g Methylmethacrylat, 12,5 g n-Butylacrylat, 146,9 g Hydroxypropylmethacrylat und 184,5 g Dimethylaminoethylmethacrylat mit 16,4 g AIBN und 7,1 g Dodecanthiol eingesetzt. Man erhitzt 200 g Diethylenglykoldimethylether auf 110°C und pumpt das Monomerengemisch in 2,5 h hinzu. Man läßt 15 h nachreagieren, wobei nach 3,5 h mit 5 Gew.-% und nach 13 h mit 10 Gew.-% AIBN nachgestartet wird. Aminzahl = 86,8, Festgehalt 80,8 %. Man neutralisiert mit Essigsäure zu 100 % und verdünnt mit Wasser Feststoffgehalt auf 33 %.

Beispiel 3

Als Monomerengemisch werden 991,3 g Styrol, 538,6 g Methylmethacrylat, 38,1 g Butylacrylat und 561,2 g Dimethylaminoethylmethacrylat mit 49,8 g AIBN und 21,7 g Dodecanthiol eingesetzt. Man erhitzt 550 g Diethylenglykoldimethylether unter Stickstoff auf 110°C und pumpt das Monomerengemisch in 2,5 h hinzu. Man läßt 14 h nachreagieren, wobei nach 8,5 h mit 5 Gew.-% AIBN nachgestartet wird. Aminzahl = 93,0, Festgehalt = 79,5 %. Man neutralisiert mit Essigsäure zu 100 % und verdünnt mit Wasser auf ein Feststoffgehalt von 33,9 %.

Beispiel 4

Als Monomerengemisch werden 13,52 g Styrol, 6,04 g Methylmethacrylat, 6,04 g Butylacrylat, 9,42 g Dimethylaminoethylmethacrylat und 8,64 g Hydroxypropylmethacrylat mit 0,836 g AIBN und 0,364 g Dodecanthiol eingesetzt. Man erhitzt 9,865 g Diethylenglykoldimethylether auf 110°C und pumpt in 2,5 h das Monomerengemisch hinzu. Man läßt 10 h nachreagieren. Aminzahl = 84,6, Festgehalt = 79,6 %. Man neutralisiert mit Essigsäure zu 100 % und verdünnt mit Wasser auf ein Feststoffgehalt von 33,4 %.

Herstellung der erfindungsgemäßen Beschichtungsmittel und Beschichtungen

Beispiel 5

Man mischt 20,41 Teile der Polymerlösung aus Beispiel 1 mit 5,19 Teilen einer 40 %igen wäßrigen Glyoxallösung mit 2,07 Teilen des Diglycidylethers eines Oligoethylenglykol des Molekulargewichts 294. Man trägt diese Mischung in einer Näßfilmdicke von 180 μm mit einer Filmziehhantel auf eine Glasplatte auf und trocknet 30 min. bei 80°C. Man erhält einen nagelharten, acetonfesten Film.

Beispiel 6

Man mischt 23,49 Teile der Polymerlösung aus Beispiel 2 mit 5,97 Teilen der Glyoxallösung und 2,39 Teilen des Bisepoxides aus Beispiel 5. Man verfährt wie in Beispiel 5 beschrieben und erhält einen nagelharten, acetonfesten Film.

Beispiel 7

Man mischt 23,48 Teile der Polymerlösung aus Beispiel 3 mit 5,96 Teilen der Glyoxallösung und 2,39 Teilen des Bisepoxides aus Beispiel 5. Man verfährt wie in Beispiel 5 beschrieben und erhält einen nagelharten, acetonfesten Film.

Beispiel 8

Man mischt 23,82 Teile der Polymerlösung aus Beispiel 4 mit 6,05 Teilen der Glyoxallösung und 2,42 Teilen des Bisepoxides aus Beispiel 5. Man verfährt wie in Beispiel 5 beschrieben und erhält einen nagelharten, acetonfesten Film.

Beispiel 9

683 Teile entmineralisiertes Wasser, 3,9 Teile polyethoxyliertes 3-Benzyl-4-hydroxybiphenyl (Ethoxylierungsgrad ca. 10), 0,75 Teile Natrium-di-sec.-butylnaphthalinsulfonat und 47,4 Teile Essigsäure werden vorgelegt und auf 80°C erwärmt. Anschließend wird eine Lösung von 1,25 Teilen Ammoniumperoxodisulfat in 11 Teilen Wasser zugegeben. Nach 5 Minuten bei 80°C wird innerhalb von 2 1/4 h bei 80°C ein Gemisch von 117,1 Teilen Styrol, 52,5 Teilen Butylacrylat, 147,2 g tert.-Butylaminoethylmethacrylat und 7,4 Teilen Dodecylmercaptan zudosiert. Danach werden 0,25 Teile Ammoniumperoxodisulfat in 12 Teilen Wasser zugegeben, bei 80°C wird 2 h nachpolymerisiert. Sämtliche Operationen werden bei intensiver Rührung durchgeführt. 13,36 Teile dieser Polymerdispersion, 3,75 Teile Glyoxal-Lösung (40 % in Wasser) und 1,5 Teile eines handelsüblichen Epoxidharzes mit einem Epoxidäquivalentgewicht von 147 (®Epikote 812 der Firma Shell Chemie GmbH) werden gemisch und mit einer Filmziehhantel auf Glas ein 120 μm (Naßfilm) dicker Lackfilm appliziert. Nach 30 Min. bei 80°C erhält man eine glänzende, transparente, elastische und lösemittelfreie Beschichtung.

Beispiel 10

Man mischt 11,82 Teile der Polymerlösung gemäß Beispiel 1 mit 2,49 Teilen einer wäßrigen Glyoxallösung. In die Mischung gibt man dann 0,25 Teile einer 20 %igen p-Toluolsulfonsäurelösung in Tetrahydrofuran. Nach dem Einrühren werden 1,17 Teile des Diglycidylethers eines Oligoethylenglykols mit einem Molekulargewicht von 294 zugegeben.
Die entstehende Mischung wird mit einer Filmziehhantel mit einer Naßfilmdicke von 180 μm auf eine Glasplatte aufgezogen und bei Raumtemperatur getrocknet. Der Film härtet über Nacht aus.

**Patentansprüche**

1.  Wäßriges Beschichtungsmittel, bestehend im wesentlichen aus
    A) mindestens einem aminofunktionellen Polymeren mit einem Gehalt an Stickstoff in Form von, gegebenenfalls zumindest teilweise protoniert vorliegenden, primären, sekundären oder tertiären Aminogruppen von 0,5 bis 10 Gew.-%,
    B) einer Epoxidkomponente, bestehend aus mindestens einem organischen Polyepoxid mit einem Epoxidäquivalentgewicht von 87 bis 400,
    C) Glyoxal und/oder einem in wäßriger Phase wie Glyoxal reagierenden Glyoxalderivat,
    D) Wasser und gegebenenfalls
    E) weiteren Hilfs- und Zusatzmitteln,
    mit der Maßgabe, daß auf jedes Aminäquivalent der Komponente A) 0,3 bis 3 Epoxidäquivalente der Komponente B) und 0,5 bis 7 Mol Glyoxal oder eine äquivalente Menge eines Glyoxalderivats entfallen.

2. Verfahren zur Herstellung von Beschichtungen auf beliebigen Substraten durch Beschichtung der Substrate mit einem wäßrigen Beschichtungsmittel, welches als Bindemittel ein selbstvernetzendes Mehrkomponenten-System enthält, dadurch gekennzeichnet, daß man als Beschichtungsmittel ein wäßriges Beschichtungsmittel gemäß Anspruch 1 verwendet.

3. Verfahren zur Herstellung von Beschichtungen gemäß Anspruch 2 zur Beschichtung beliebiger hitzeresistenter Substrate, dadurch gekennzeichnet, daß die Beschichtungen bei 80-150°C eingebrannt werden.